Europäisches Patentamt

European Patent Office

Office européen des brevets

(11) Veröffentlichungsnummer: **0 238 774**
**A2**

## (12) EUROPÄISCHE PATENTANMELDUNG

(21) Anmeldenummer: 86730106.1

(22) Anmeldetag: **10.07.86**

(51) Int. Cl.⁴: **C02F 7/00** , B01F 5/04

(30) Priorität: **25.03.86 DE 8608486 U**

(43) Veröffentlichungstag der Anmeldung:
**30.09.87 Patentblatt 87/40**

(84) Benannte Vertragsstaaten:
**AT BE DE FR NL**

(71) Anmelder: **DOMKE GMBH & CO. KG**
**Rhenaniastrasse Am Salzhof 15**
**D-1000 Berlin 20(DE)**

(72) Erfinder: **Gamradt, Ruth**
**Schinkelstrasse 2**
**D-1000 Berlin 33(DE)**

(74) Vertreter: **Bergmann, Jürgen, Dipl.-Ing.**
**Patentanwälte PFENNING, MEINIG &**
**PARTNER Kurfürstendamm 170**
**D-1000 Berlin 15(DE)**

(54) **Vorrichtung zur Anreicherung von Wasser mit Sauerstoff.**

(57) Es wird eine mobile Vorrichtung zur Anreicherung des sauerstoffarmen Wassers eines Gewässers mit Sauerstoffgas oder einem Sauerstoff enthaltenden Gas beschrieben. Das Gas ist in komprimierter Form in einem Tank (4) enthalten. Die Vorrichtung ist auf einem Schwimmkörper (1) angeordnet. Das Gas wird aus dem Tank über Verdampfer (5) zu einem Diffusor (6) geleitet. Der Diffusor ist an einer Breitseite des Schwimmkörpers gelagert und kann in vertikaler Richtung verschoben werden, derart, daß er sich entweder oberhalb oder unterhalb des Wasserspiegels befindet. Der Diffusor weist vorzugsweise wenigstens ein Venturirohr auf.

Fig. 1

EP 0 238 774 A2

## Vorrichtung zur Anreicherung von Wasser mit Sauerstoff

Die Erfindung betrifft eine mobile Vorrichtung nach dem Oberbegriff des Anspruchs 1.

Es werden sowohl mobile als auch immobile Vorrichtungen zur Anreicherung von Wasser mit Sauerstoff verwendet. Die mobilen Vorrichtungen dienen zur Beseitigung oder Milderung plötzlich auftretender, lokal begrenzter Sauerstoffarmut in Gewässern und sind in der Regel auf Landfahrzeugen installiert. Der Sauerstoff wird hier in komprimierter Form auf dem Fahrzeug gelagert und in das Gewässer eingeblasen. Nachteilig sind hier die geringe Kapazität des Sauerstofftanks und die Beschränkung der Sauerstoffeinleitung auf ufernahe Bereiche der Gewässer. Durch immobile Vorrichtungen kann die Sauerstoffanreicherung systematisch erfolgen. Die hierfür erforderlichen Investitionen lohnen sich jedoch nur für größere Gewässer. Diese Vorrichtungen arbeiten gebräuchlicherweise so, daß Luft oder Sauerstoff aus großen Tanks in das Wasser eingeblasen werden, so daß Kapazitätsprobleme nicht bestehen. Bei diesen immobilen Vorrichtungen ist jedoch andererseits nicht die Möglichkeit gegeben, örtlich begrenzte kurzzeitige Sauerstoffverarmungen schnell und wirksam zu bekämpfen.

Es ist daher die Aufgabe der vorliegenden Erfindung, eine Vorrichtung zur Anreicherung eines sauerstoffarmen Wassers eines Gewässers mit Sauerstoffgas oder einem Sauerstoff enthaltenden Gas zu schaffen, mit der in wirtschaftlicher Weise sowohl eine systematische Anhebung des allgemeinen Sauerstoffgehalts eines Gewässers unahbängig von seiner Größe als auch eine effektive, räumlich konzentrierte Bekämpfung plötzlicher Sauerstoffverarmungen erreicht werden kann, wobei ein hoher Wirkungsgrad durch feinste Verteilung des Gases im Wasser erzielt werden soll.

Diese Aufgabe wird erfindungsgemäß durch die im kennzeichnenden Teil des Anspruchs 1 angegebenen Merkmale gelöst. Vorteilhafte Ausgestaltungen der erfindungsgemäßen Vorrichtung ergeben sich aus den Unteransprüchen.

Die Erfindung zeichnet sich dadurch aus, daß die Vorrichtung auf einem Schwimmkörper angeordnet ist und eine Mischeinrichtung zur Vermischung des Gases mit Wasser aufweist, wobei die Mischeinrichtung aus einem Diffusor besteht, durch den das Gas in feinsten Blasen im Wasser verteilt wird.

Als besonders geeignet hat sich ein Diffusor erwiesen, der ein vom Wasser durchströmtes Venturirohr ist, dem das Gas im Bereich des engsten Rohrquerschnitts zuführbar ist. Man erhält hierbei an der Sauerstoffinjektionsstelle eine Wassergeschwindigkeit, die etwa dem doppelten Wert der Relativgeschwindigkeit zwischen dem Wasser und dem Schwimmkörper ist.

Vorteilhaft besteht der Diffusor aus zwei koaxialen Venturirohren unterschiedlichen Durchmessers, die sich in Längsrichtung unter Bildung eines Spaltes geringfügig überdecken, wobei das Gas dem Venturirohr geringeren Durchmessers zuführbar ist und dieses Venturirohr in Strömungsrichtung des Wassers von dem Venturirohr größeren Durchmessers liegt. Durch diese Anordnung kann erreicht werden, daß die Strömungsgeschwindigkeit des Wassers an der Sauerstoffinjektionsstelle mehr als das Dreifache der Relativgeschwindigkeit zwischen Wasser und Schwimmkörper beträgt. Je höher die Wassergeschwindigkeit an der Injektionsstelle ist, desto größer ist die Sauerstoffaufnahme und desto feiner sind die vom Wasser aufgenommenen Gasblasen verteilt.

Zur Erzielung eines großen Wasserdurchsatzes liegt die Axialrichtung des Diffusors vorzugsweise quer zur Längsrichtung des Schwimmkörpers. Der Diffusor kann sich dann in seiner Querrichtung entlang des gesamten Schwimmkörpers erstrecken. Die Venturirohre besitzen dann einen rechteckigen Querschnitt und der Diffusor weist in Axialrichtung zweckmäßig eine Ausdehnung von etwa 1,5 m und senkrecht hierzu eine Ausdehnung von etwa 25 m auf.

Um den Fahrbetrieb des Schwimmkörpers, d.h. die Fahrten zur und von der Einsatzstelle nicht zu stark zu behindern, ist der Diffusor zweckmäßig seitlich des Schwimmkörpers zum Absenken in das Wasser und zum Herausheben aus dem Wasser in der Höhe verstellbar gelagert. Der Diffusor wird somit während des Fahrbetriebs über der Wasseroberfläche gehalten und erst an der Einsatzstelle unter die Wasseroberfläche abgesenkt. Hierbei ist er vorzugsweise bis unterhalb des Bodens des Schwimmkörpers absenkbar, damit die Wasserströmung durch den Diffusor nicht durch den Schwimmkörper behindert wird.

Der Schwimmkörper besitzt vorteilhaft eine in beliebigen Richtungen wirksame Antriebseinrichtung, so daß er im Fahrbetrieb in Längsrichtung und im Einsatzbetrieb, d. h. bei der Einleitung von Sauerstoff, in Querrichtung bewegt werden kann. Zur Erzielung einer hohen Manövrierfähigkeit ist die Antriebseinrichtung zweckmäßig als Wasserstrahlantrieb ausgebildet, wobei mindestens ein Antrieb im Bug-und mindestens ein Antrieb im Heckbereich des Schwimmkörpers angeordnet sind.

Die Diffusor ruht vorzugsweise auf einem Rahmen, der in der Höhe verstellbar an an einer Breitseits des Schwimmkörpers fest angeordneten Halteelementen gehalten ist.

Die Erfindung wird im folgenden anhand eines in den Figuren dargestellten Ausführungsbeispiels näher erläutert. Es zeigen:

Fig. 1 einen Schwimmkörper in der Draufsicht,

Fig. 2 den Schwimmkörper nach Fig. 1 in der Seitenansicht,

Fig. 3 einen sogenannten Tandem-Diffusor in der Schnittansicht,

Fig. 4 die Halteeinrichtung für den Diffusor, und

Fig. 5 die Hebe-und Senkvorrichtung für den Diffusor.

Der Schwimmkörper 1 hat die Form eines in der Draufsicht rechteckigen Pontons und beispielsweise eine Länge von 17,5 m, eine Breite von 5,5 m und eine Tiefe von 1,35 m. Der Schwimmkörper 1 ist selbstfahrend und wird von zwei Wasserstrahlantrieben 2 angetrieben, bei denen über ein Laufrad am Boden des Schwimmkörpers 1 Wasser eingesaugt, beschleunigt und aus einem um 360° um die Vertikalachse drehbaren Krümmer als Schubstrahl wieder ausgestoßen wird. Die Wasserstrahlantriebe 2 werden durch zwei dieselhydraulische Antriebsaggregate 3 angetrieben, derart, daß die von einem Dieslmotor gelieferte Leistung einem den Wasserstrahlantrieb antreibenden Hydraulikmotor zugeführt wird. Jeweils ein Wasserstrahlantrieb 2 befindet sich am Bug und am Heck des Schwimmkörpers 1, so daß eine extrem hohe Manovrierfähigkeit des Schwimmkörpers gewährleistet ist. Dieser kann somit im Fahrbetrieb in seiner Längsrichtung und im Einsatzbetrieb in seiner Querrichtung bewegt werden. Die Änderung der Fahrtrichtung des Schwimmkörpers 1 kann somit ohne jede Zeitverzögerung erfolgen.

In einem Tank 4 mit einer Nutzlast von ca. 13 Tonnen befindet sich flüssiger Sauerstoff. Dieser wird über Verdampfer 5 einem Diffusor 6 zugeführt, um in gasförmigem Zustand in Form fein verteilter Bläschen vom durch den Diffusor 6 geleiteten Wasser aufgenommen zu werden. Der Diffusor 6 ist an einer Breitseite des Schwimmkörpers 1 installiert und besitzt eine in Längsrichtung des Schwimmkörpers 1 verlaufende Ausdehnung von etwa 15 m und senkrecht hierzu eine Ausdehnung von etwa 1,5 m.

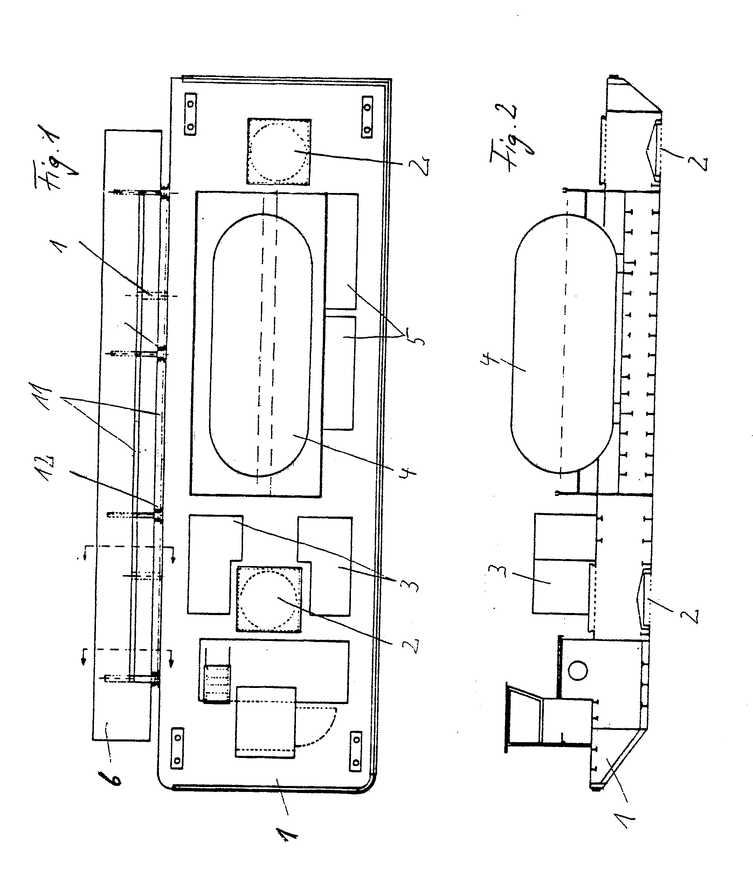

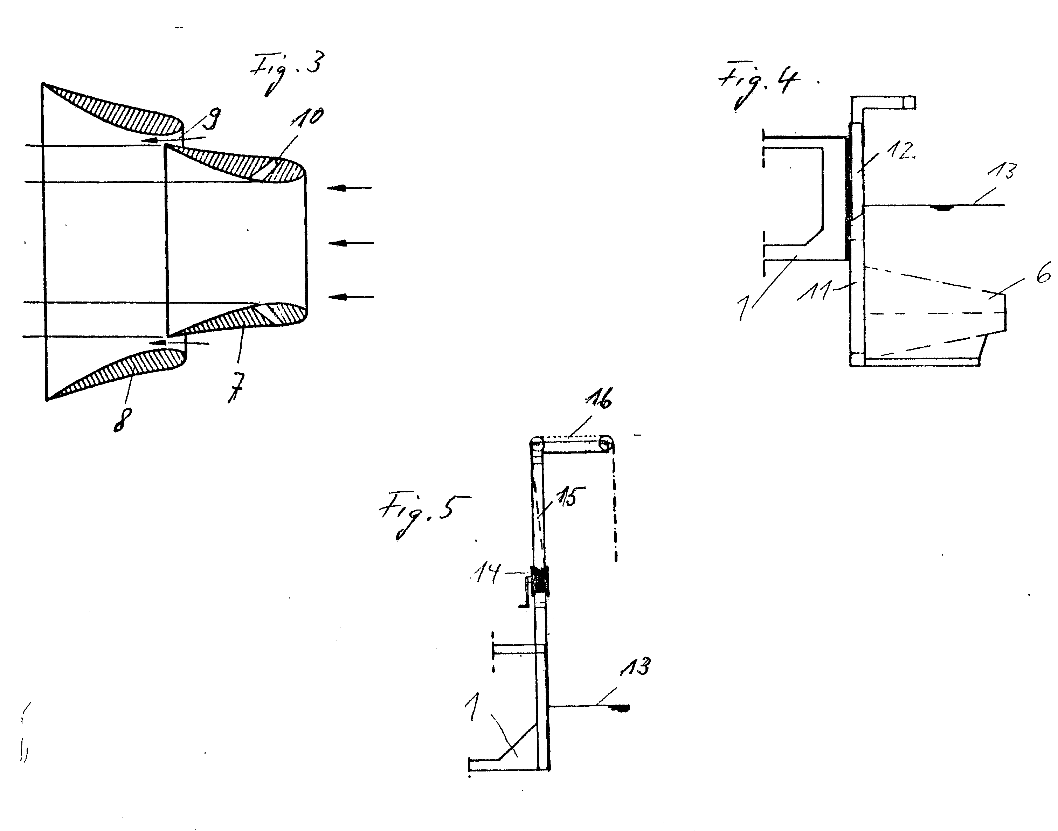

Der Diffusor 6 ist in Fig. 3 in einem senkrecht zur Längsachse des Schwimmkörpers 1 verlaufenden Schnitt dargestellt. Er besteht aus zwei koaxial angeordneten Venturirohren 7 und 8, deren Durchtrittsöffnungen rechteckig ausgebildet sind. Das Venturirohr 8 hat einen größeren Querschnitt als das Venturirohr 7 und überdeckt dieses in der Wasserströmungsrichtung geringfügig, so daß zwischen ihnen ein Spalt 9 entsteht. Die Wasserströmungsrichtung ist durch Pfeile angedeutet; d.h. das Wasser strömt von rechts zunächst in das Venturirohr 7 und dann in das Venturirohr 8 sowie zusätzlich durch den Spalt 9 direkt in das Venturirohr 8. Das Venturirohr 7 hat in seinem engsten Bereich eine Höhe von etwa 1 m und in der Richtung senkrecht zur Schnittebene eine Ausdehnung von etwa 15 m.

Der aus den Verdampfern 5 kommende gasförmige Sauerstoff wird über Bohrungen 10 in das Innere des Venturirohrs 7 geführt. Die Bohrungen 10 sind senkrecht zur Schnittrichtung in Reihen hintereinander angeordnet, wobei vorzugsweise fünf derartiger Reihen vorgesehen sind und die Bohrungen einen Durchmesser von jeweils 1 mm besitzen. Der Sauerstoff wird durch die Wasserströmung aus den Bohrungen 10 herausgesaugt, so daß keine zusätzlichen Maßnahmen für den Sauerstofftransport erforderlich sind. Je höher die Geschwindigkeit des Wassers im Venturirohr 7 vor den Bohrungen 10 ist, desto größer ist die vom Wasser aufgenommene Sauerstoffmenge und desto feiner wird der Sauerstoff im Wasser verteilt, d.h. die Größe der Sauerstoffbläschen nimmt mit steigender Wassergeschwindigkeit ab. Bei Verwendung nur eines Venturirohrs erhält man an der Sauerstoffeingabestelle eine Wassergeschwindigkeit, die etwa der zweifachen Relativgeschwindigkeit zwischen dem Schwimmkörper und dem Wasser entspricht, während bei dem dargestellten sogenannten Tandem-Diffusor aus den Venturirohren 7 und 8 die Wassergeschwindigkeit vor den Bohrungen 10 mehr als das Dreifache dieser Geschwindigkeit beträgt.

Der Diffusor 6 ruht auf einem Rahmen 11 aus vertikal und horizontal verlaufenden Streben aus feuerverzinktem Rechteckstrahlrohr. Die vertikal verlaufenden Streben des Rahmens 11 sind verschiebbar in Halteelementen 12 gelagert, die an einer Breitseite des Schwimmkörpers 1 befestigt sind. Mit Hilfe von in den vertikalen Streben des Rahmens 11 und in den Halteelementen 12 entsprechend angeordneten Bohrungen und Absteckbolzen kann die Höhe des Rahmens 11 bzw. des Diffusors 6 stufenweise in gewünschten Stellungen eingestellt werden. Fig. 4 zeigt, daß der Diffusor 6 so weit unter den Wasserspiegel heruntergelassen werden kann, daß seine Wasseraustrittsöffnung unterhalb des Bodens des Schwimmkörpers 1 liegt, so daß die Wasserströmung durch den Diffusor 6 durch den Schwimmkörper 1 nicht behindert wird.

Das Anheben und Absenken des Rahmens 11 erfolgt mit Hilfe zweier Handwinden 14, durch die je ein Seil 15 auf-und abwickelbar ist, das über einen Ausleger 16 und daran befestigte Rollen mit der oberen horizontalen Strebe des Rahmens 11 verbunden ist.

Die Vorrichtung arbeitet somit wie folgt. Bei den Fahrten des Schwimmkörpers zum Einsatzort hin bzw. von diesem weg wird der Schwimmkörper durch die Wasserstrahlantriebe 2 in seiner Längsrichtung bewegt, wobei der Rahmen 11 soweit angehoben ist, daß der Diffusor 6 sich vollständig über dem Wasserspiegel befindet und so die Fahrt nicht behindert. Am Einsatzort wird der Rahmen 11 mit Hilfe der Handwinden 14 so weit herabgelassen, daß der Diffusor 6 vollständig in das Wasser eingetaucht ist und sich auch unterhalb des Schwimmkörpers 1 selbst befindet, so daß er ungehindert vom Wasser durchströmt werden kann. Die Wasserstrahlantriebe 2 bewirken jetzt eine Bewegung des Schwimmkörpers 1 quer zu seiner Längsrichtung, und zwar derart, daß der Diffusor 6 in der in Fig. 3 angedeuteten Richtung vom Wasser durchströmt wird. Dabei wird dem Wasser in der beschriebenen Weise Sauerstoff aus dem Tank 4 über die Verdampfer 5 zugeführt.

**Ansprüche**

1. Mobile Vorrichtung zur Anreicherung des sauerstoffarmen Wassers eines Gewässers mit Sauerstoffgas oder einem Sauerstoff enthaltenden Gas mit einem dieses in komprimierter Form enthaltenden Tank, **dadurch gekennzeichnet,** daß die Vorrichtung auf einem Schwimmkörper (1) angeordnet ist und eine Mischeinrichtung zur Vermischung des Gases mit Wasser aufweist, wobei die Mischeinrichtung aus einem Diffusor (6) besteht, durch den das Gas in feinsten Blasen im Wasser verteilt wird.

2. Vorrichtung nach Anspruch 1, dadurch gekennzeichnet, daß der Diffusor (6) ein vom Wasser durchströmtes Venturirohr ist, dem das Gas im Bereich des engsten Rohrquerschnitts zuführbar ist.

3. Vorrichtung nach Anspruch 2, dadurch gekennzeichnet, daß der Diffusor (6) aus zwei koaxialen Venturirohren (7,8) unterschiedlicher Größe besteht, die sich in Wasserströmungsrichtung unter Bildung eines Spalts (9) geringfügig überdecken, wobei das Gas dem kleineren Venturirohr (7) zuführbar ist und dieses Venturirohr (7) in Strömungsrichtung des Wassers vor dem größeren Venturirohr (8) liegt.

4. Vorrichtung nach Anspruch 2 oder 3, dadurch gekennzeichnet, daß die Wasserströmungsrichtung des Diffusors (6) quer zur Längsrichtung des Schwimmkörpers (1) liegt.

5. Vorrichtung nach einem der Ansprüche 1 bis 4, dadurch gekennzeichnet, daß der Diffusor (6) seitlich des Schwimmkörpers (1) zum Absenken in das Wasser und zum Herausheben aus dem Wasser in der Höhe verstellbar gelagert ist.

6. Vorrichtung nach Anspruch 5, dadurch gekennzeichnet, daß der Diffusor (6) bis unterhalb des Bodens des Schwimmkörpers (1) absenkbar ist.

7. Vorrichtung nach Anspruch 5 oder 6, dadurch gekennzeichnet, daß der Diffusor (6) auf einem Rahmen (11) ruht, der in der Höhe verstellbar an an einer Breitseite des Schwimmkörpers (1) fest angeordneten Halteelementen (12) gehalten ist.

8. Vorrichtung nach Anspruch 7, dadurch gekennzeichnet, daß der Diffusor (6) mittels einer Windenkonstruktion (14 bis 16) heb-und senkbar ist und durch in dem Rahmen (11) und die Halteelemente (12) einsteckbare Bolzen in der jeweisl gewünschten Höhe gehalten ist.

9. Vorrichtung nach einem der Ansprüche 1 bis 8, dadurch gekennzeichnet, daß der Schwimmkörper (1) mit einer in beliebigen Richtungen wirksamen Antriebseinrichtung (2) versehen ist.

10. Vorrichtung nach Anspruch 9, dadurch gekennzeichnet, daß die Antriebseinrichtung als Wasserstrahlantrieb (2) ausgebildet ist, wobei mindestens ein Antrieb im Bug-und mindestens ein Antrieb im Heckbereich des Schwimmkörpers (1) angeordnet sind.

11. Vorrichtung nach einem der Ansprüche 2 bis 10, dadurch gekennzeichnet, daß die Venturirohre (7,8) einen rechteckigen Querschnitt aufweisen.

12. Vorrichtung nach Anspruch 11, dadurch gekennzeichnet, daß der Diffusor (6) in Wasserströmungsrichtung eine Ausdehnung von etwa 1,5 m und senkrecht zu dieser Richtung eine Ausdehnung von etwa 15 m besitzt.

13. Vorrichtung nach einem der Ansprüche 1 bis 12, dadurch gekennzeichnet, daß das Gas im Tank (4) in flüssiger Form gelagert ist und daß zwischen Tank (4) und Diffusor (6) mindestens ein Verdampfer (5) angeordnet ist.

Fig. 1

Fig. 2

Fig. 4

Fig. 5

Fig. 3